# EUROPEAN PATENT SPECIFICATION

(11) **EP 3 791 990 B1**
(45) Date of publication and mention of the grant of the patent: **25.09.2024**
(21) Application number: 19799498.1
(22) Date of filing: 03.04.2019
(51) Int. Cl.: B23K 13/02, B23K 13/08, B23K 33/00, B23K 37/00

(54) **POWER SUPPLY COIL FOR ELECTRIC RESISTANCE WELDING AND PIPE MANUFACTURING EQUIPMENT USING SAME**
STROMVERSORGUNGSSPULE FÜR WIDERSTANDSSCHWEISSEN UND ROHRHERSTELLUNGSAUSRÜSTUNG MIT VERWENDUNG DAVON
BOBINE D'ALIMENTATION EN COURANT DESTINÉE AU SOUDAGE PAR RÉSISTANCE ÉLECTRIQUE ET ÉQUIPEMENT DE FABRICATION DE TUYAU UTILISANT LADITE BOBINE D'ALIMENTATION EN COURANT

(30) Priority: 11.05.2018 JP 2018091869
(43) Date of publication of application: 17.03.2021
(73) Proprietor: NIPPON STEEL CORPORATION, Chiyoda-ku Tokyo 100-8071 (JP)
(72) Inventor: WATANABE, Fuminori, Tokyo 100-8071 (JP); IMANISHI, Akira, Tokyo 100-8071 (JP); KARUBE, Yoshifumi, Tokyo 100-8071 (JP); TSURUGA, Takuto, Tokyo 100-8071 (JP)
(74) Representative: Vossius & Partner Patentanwälte Rechtsanwälte mbB
(86) International application number: PCT/JP2019/014792
(87) International publication number: WO 2019/216065

(56) References cited:
- WO-A1-2015/152059
- JP-A- 2010 108 730
- JP-A- 2010 108 730
- JP-A- 2014 036 983
- JP-B2- H0 157 480
- JP-B2- H0 719 656
- US-A- 3 122 624
- US-A- 3 122 624
- US-A- 3 414 697
- US-A1- 2016 350 902

## Description

### [Technical Field of the Invention]

The present invention relates to a power supply coil for electric resistance welding used for manufacturing an electric resistance welding steel pipe, and a pipe manufacturing equipment using the same.

Priority is claimed on Japanese Patent Application No. 2018-091869, filed in Japan on May 11, 2018.

### [Related Art]

Since electric resistance welding enables electric resistance welding steel pipes with high roundness and small uneven thickness to be manufactured with high productivity, the electric resistance welding is widely used at the time of the manufacture of structural pipes, line pipes, oil well pipes, and the like. However, since the electric resistance welding steel pipes are welded pipes, it is important to secure the welding quality, and it has been difficult to use a difficult-to-weld material as the material of the electric resistance welding steel pipe. In order to make this possible, a plasma shielding technique for reducing welding defects and a quality stabilization technique for electric resistance welding such as welding monitoring and heat input control have been developed.

In a case where an electric resistance welding steel pipe is welded by electric resistance, in a welding zone of a pipe manufacturing line, a high-frequency current is applied to butting ends of a steel sheet formed into a tubular shape to perform the electric resistance welding. As a method for such electric resistance welding, for example, a power supply coil for electric resistance welding is used. In the welding zone of the pipe manufacturing line, the power supply coil for electric resistance welding is disposed on an upstream side of a squeeze roll in a pipe manufacturing direction to perform the electric resistance welding. An optical camera that monitors the state of a electric-resistance welded portion may be disposed in the welding zone. Since the state of the electric-resistance welded portion is monitored by the optical camera, it is important to capture a clear image.

Patent Document 2 describes a hollow coil in which a cooling fluid flow.

Patent Document 3 describes a coil comprising coil portions and having a gap, wherein the coil has a U-shaped "nose-coil" portion bridging the gap and cooling fluid cavities within the coil portions.

### [Prior Art Document]

### [Patent Document]

[Patent Document 1] Japanese Patent No. 5966756
[Patent Document 2] US 3 122 624 A
[Patent Document 3] US 3 414 697 A

### [Disclosure of the Invention]

### [Problems to be Solved by the Invention]

In the welding zone where the electric resistance welding steel pipe is welded by electric resistance, cooling water is jetted to cool the power supply coil for electric resistance welding. However, in an external water-cooled type in which the cooling water is directly jetted to the power supply coil for electric resistance welding, the jetting of the cooling water to the power supply coil for electric resistance welding splashes water, problems caused by the water splashing, such as steam oxidation of the welded portion being promoted to degrade the welding quality, the accuracy of the monitoring system being reduced, and the failure of the plasma device being induced, have become apparent.

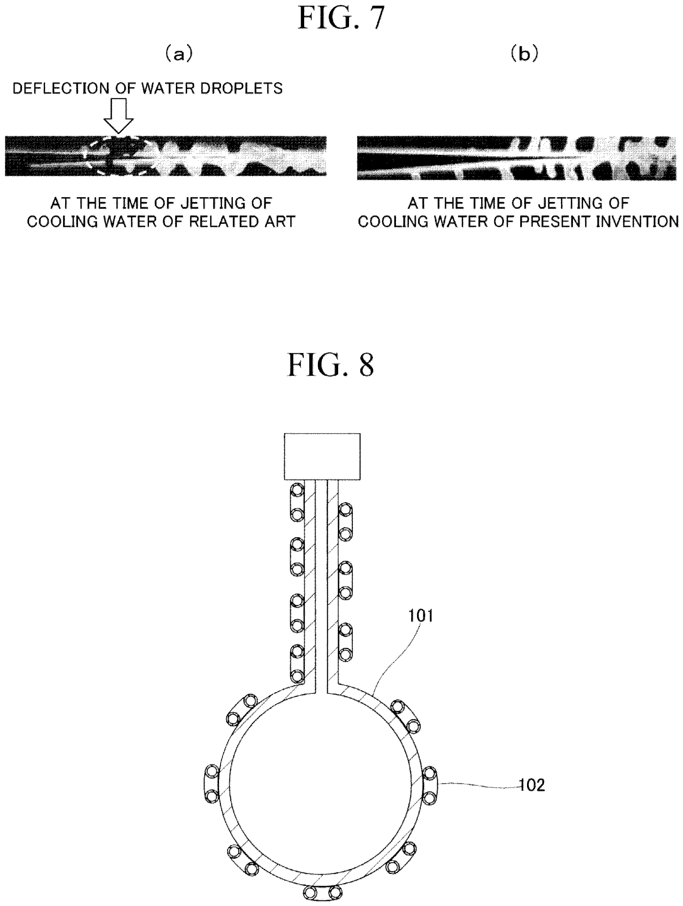

As an approach to the problems, for example, an internal water-cooled type power supply coil that suppresses water splashing as in Patent Document 1 has been developed by making a hole in the power supply coil or brazing a copper pipe and passing cooling water through the hole. The outline is shown in FIG. 8. In FIG. 8, 101 is a power supply coil, and 102 is a water-cooling pipe made of a brazed copper pipe.

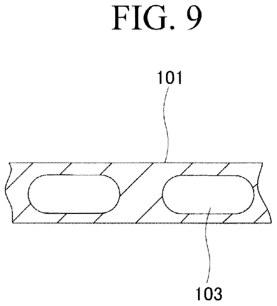

FIG. 9 shows an example of another internal water-cooled type power supply coil of Patent Document 1. In FIG. 9, reference numeral 103 is a cooling water channel formed by hollowing out the power supply coil 101. In FIG. 8, in order to prevent the power supply coil 101 from being melted in a case where the heat radiation between the water cooling pipe 102 and the water-cooling pipe 102 is insufficient, and in FIG. 9, it is necessary to secure about 10 mm as the thickness of a coil body is increased from the viewpoint of stiffness and machining accuracy, and there is a problem that it is difficult to reduce the weight. For this reason, in a case where the existing equipment is modified, there is a constraint on pipe manufacturing size from the viewpoint of weight, and there has been an urgent need to develop a lightweight internal water-cooled type power supply coil.

The present invention has been made in view of the above circumstances, and an object thereof is to provide a power supply coil for electric resistance welding for heating a steel pipe to be welded by electric resistance, in which the thickness of the power supply coil for electric resistance welding can be reduced to reduce the weight, water droplets are not splashed, and efficient cooling is possible, and pipe manufacturing equipment using the same. Moreover, an object of the present invention is to provide pipe manufacturing equipment capable of manufacturing a large-diameter electric resistance welding steel pipe without any trouble.

### [Means for Solving the Problem]

In order to solve the above problems, the present invention adopts the following means.
(1) A power supply coil for electric resistance welding according to a first aspect of the present invention is a power supply coil for electric resistance welding for heating a steel pipe to be welded by electric resistance, including a metal coil that has a single-turn tubular shape and has a pair of end surfaces facing each other in a circumferential direction; a pair of metal plates that is connected to the pair of end surfaces of the metal coil; a cover that is attached to at least one of outer surfaces and inner surfaces of the metal coil and the pair of metal plates; a side wall portion that is interposed between the metal coil and the cover and between the pair of metal plates and the cover; a supply pipe for supplying cooling water space surrounded by the metallic coil, the pair of metallic plates, the cover, and the side wall portion; and a discharge pipe for discharging the cooling water from the space.
(2) In the aspect described in the above (1), the power supply coil for electric resistance welding according to the present invention includes a partition member that divides a first space into a second space that communicates with the supply pipe and a third space that communicates with the discharge pipe, the first space being surrounded by the metal coil, the cover, and the side wall portion, and the partition member have an opening that is located at a first end of the partition member in a longitudinal direction of the partition member and that allows the second space and the third space to communicate with each other.
(3) In the aspect described in the above (2), a plurality of the partition members are, according to the present invention, substantially parallel to each other in the first space, and the openings of the plurality of partition members are alternately formed at the first end and a second end opposite to the first end in the longitudinal direction of the partition member from the supply pipe toward the discharge pipe.
(4) In the aspect described in the above (3), the power supply coil for electric resistance welding may further include a partition member that divides a fourth space into a fifth space that communicates with the supply pipe and a sixth space that communicates with the discharge pipe, the fourth space being surrounded by the pair of metal plates, the cover, and the side wall portion, and the partition member may have an opening that is located at a third end of the partition member in a longitudinal direction and that allows the fifth space and the sixth space to communicate with each other.
(5) In the aspect described in the above (4), a plurality of the partition members may be disposed substantially parallel to each other in the fourth space, and the openings of the plurality of partition members may be alternately formed at the third end and a fourth end opposite to the third end in the longitudinal direction from the supply pipe toward the discharge pipe.
(6) In the aspect described in any one of the above (2) to (5), an area of the opening may become smaller or the same from the supply pipe toward the discharge pipe.
(7) In the aspect described in any one of the above (1) to (6), the cover may be attached only to the outer surfaces of the metal coil and the pair of metal plates.
(8) In the aspect described in any one of the above (1) to (7), a diameter of the supply pipe may be set to be equal to or smaller than a diameter of a cooling water source pipe connected to the supply pipe.
(9) In the aspect described in any one of the above (1) to (8), the metal coil and the pair of metal plates are made of copper or a copper alloy.
(10) A pipe manufacturing equipment according to a second aspect of the present invention includes the power supply coil for electric resistance welding according to any one of the above (1) to (9); and a squeeze roll that is disposed on a pipe manufacturing downstream side of the power supply coil for electric resistance welding, and the power supply coil for electric resistance welding is cooled from the pipe manufacturing downstream side.
(11) In the aspect described in the above (10), the pipe manufacturing equipment may include both or either of a plasma shielding unit for plasma-shielding an electric-resistance welded portion of the steel pipe between the power supply coil for electric resistance welding and the squeeze roll, and an optical camera that monitors a state of the electric-resistance welded portion.

### [Effects of the Invention]

According to the present invention, it is possible to provide the power supply coil for electric resistance welding for heating a steel pipe to be welded by electric resistance, in which the thickness of the power supply coil for electric resistance welding can be reduced to reduce the weight, water droplets are not splashed, and efficient cooling is possible, and the pipe manufacturing equipment using the same. Moreover it is possible to provide the pipe manufacturing equipment capable of manufacturing a large-diameter electric resistance welding steel pipe without any trouble.

### [Brief Description of the Drawings]

FIG. 1 is a schematic view of an entire pipe manufacturing line by electric resistance welding using a power supply coil for electric resistance welding according to the present invention.
FIG. 2 is an enlarged schematic view of a case where a plasma shielding unit and an optical camera that are welding zone main parts of the pipe manufacturing line shown in FIG. 1 are disposed. (A) shows a case where the plasma shielding unit and the optical camera are disposed together, (B) shows a case where only the optical camera is disposed, and (C) shows a case where only the plasma shielding unit is disposed.
FIG. 3 is a perspective view of a metal coil, a pair of metal plates, and a cover of the power supply coil for electric resistance welding according to an example not being part of the present invention.
FIG. 4 is a perspective view showing a state where a partition member is attached to the outer surfaces of a metal coil and a pair of metal plates in a power supply coil for electric resistance welding according to an embodiment of the present invention.
FIG. 5 is a view showing a flow of cooling water in a first space (a space surrounded by the metal coil, the cover, and a side wall portion) in a case where the partition member is not provided, and is a development view of a side surface portion of the metal coil when viewed from a direction perpendicular to the metal plate.
FIG. 6 is a view showing a flow of cooling water in a first space (a space surrounded by the metal coil, the cover, and the side wall portion) in a case where the partition member is provided in the embodiment of the present invention, and is a development view of the side surface portion of the metal coil when viewed from the direction perpendicular to the metal plate.
FIG. 7 is an optical camera image obtained by imaging a water splashing situation of an electric-resistance welded portion during pipe manufacturing, (a) is an optical camera image in a case where a related-art external water-cooled type power supply coil is used, and (b) is an optical camera image in a case where the power supply coil for electric resistance welding of the present invention is used.
FIG. 8 is a view showing a power supply coil of a prior art, and is a cross-sectional view of the power supply coil as viewed from a pipe manufacturing direction.
FIG. 9 is a view showing another power supply coil of the prior art, and is a cross-sectional view of the power supply coil viewed from the pipe manufacturing direction.

### [Embodiments of the Invention]

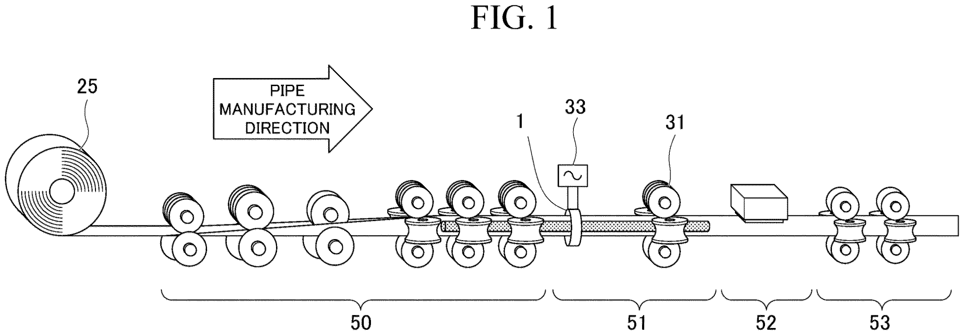

Hereinafter, a power supply coil 1 for electric resistance welding according to an example not being part of the present invention will be described with reference to FIGS. 1 to 3.

The power supply coil 1 for electric resistance is disposed in a welding zone of a pipe manufacturing line for electric resistance welding of an electric resistance welding steel pipe. FIG. 1 is a schematic view of the entire pipe manufacturing line by the electric resistance welding using the power supply coil 1 for electric resistance welding.

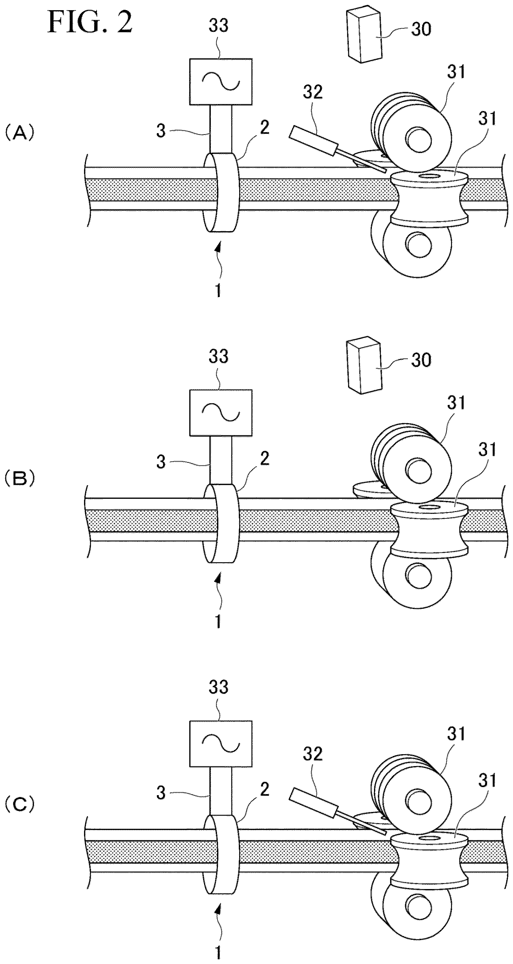

A steel sheet, which is a base material, is pulled out from a steel sheet coil 25, is welded in a welding zone 51 in a state where both ends thereof are gradually bent inward while passing through a forming zone 50 composed of a plurality of forming rolls and the cross section thereof is a circular shape, and becomes an electric resistance welding steel pipe (hereinafter may be simply referred to as a steel pipe). The steel sheet is preferably a hot-rolled steel sheet. The power supply coil 1 for electric resistance welding and a squeeze roll 31 are disposed in the welding zone 51 where the electric resistance welding is performed. The power supply coil 1 for electric resistance welding is disposed on an upstream side of the squeeze roll 31 in a pipe manufacturing direction. The pipe manufacturing direction is a direction in which the steel pipe is conveyed, and is indicated by the arrow in FIG. 1. That is, the pipe manufacturing direction is a direction from a left side to a right side on a paper plane of FIGS. 1 and 2, the left side is an upstream side and the right side is a downstream side. Thereafter, the welded electric resistance welding steel pipe is cut after passing through a heat treatment zone 52 and a sizing zone 53.

FIG. 2 is an enlarged schematic view of a case where a plasma shielding unit 32 and an optical camera 30, which are the welding zone main parts of the pipe manufacturing line shown in FIG. 1, are disposed. The present example has both or either of the plasma shielding unit 32 and the optical camera 30. (A) of FIG. 2 shows a case where the plasma shielding unit and the optical camera are disposed together, (B) of FIG. 2 shows a case where only the optical camera is disposed, and (C) of FIG. 2 shows a case where only the plasma shielding unit is disposed. The plasma shielding unit 32 performs the electric resistance welding while irradiating an electric-resistance welded portion of the electric resistance welding steel pipe with plasma between the power supply coil 1 for electric resistance welding and the squeeze roll 31. The optical camera 30 is disposed above a welded portion of the electric resistance welding steel pipe to monitor the state of the electric-resistance welded portion. The pair of metal plates 3 of the power supply coil 1 for electric resistance welding is connected to a high-frequency power source 33 as shown in FIG. 2, and a high-frequency current having a frequency of 100 kHz to 400 kHz, for example, is applied thereto. It is well known that a steel sheet having a rounded cross section while passing through the forming zone 50 is heated by high frequency while passing through the inside of a metal coil 2.

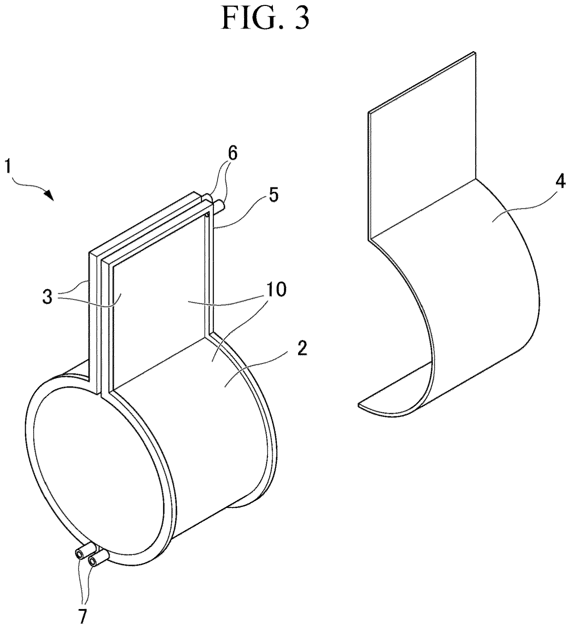

FIG. 3 is a perspective view of the metal coil 2, the pair of metal plates 3, and the cover 4 of the power supply coil 1 for electric resistance welding according to the present example. The power supply coil 1 for electric resistance welding has a cover 4 attached to at least one of outer surfaces and inner surfaces of the metal coil 2 and the pair of metal plates 3.

The metal coil 2 of the power supply coil 1 for electric resistance welding has a shape as shown in FIG. 3, has a single-turn tubular shape, and has a pair of end surfaces facing each other in the circumferential direction. The pair of metal plates 3 is connected to a pair of end surfaces of the metal coil 2. The steel pipe is insertable through the metal coil 2 in the pipe manufacturing direction. The metal coil 2 and the pair of metal plates 3 are desirably made of copper or copper alloy from the viewpoints of electric conduction, heat conduction, and cost. The thickness of the metal coil 2 and the pair of metal plates 3 is desirably 0.5 mm or more from the viewpoints of heat capacity and durability. The thickness of the metal coil 2 and the pair of metal plates 3 is desirably 5 mm or less from the viewpoint of weight reduction. In addition, the thicknesses of the metal coil 2 and the pair of metal plates 3 may be appropriately changed depending on the circumstances of equipment and operation.

In the present example, as shown in FIG. 3, the cover 4 is attached only to the outer surfaces of the metal coil 2 and the pair of metal plates 3. The outer surface of the metal coil 2 is a surface that faces outward from a central axis of the metal coil 2. The outer surfaces of the pair of metal plates 3 are surfaces of the pair of metal plates 3 that are continuously connected to the outer surface of the metal coil 2. In addition, the inner surface of the metal coil 2 is a surface that faces inward from the central axis of the metal coil 2. The inner surfaces of the pair of metal plates 3 are the surfaces of the pair of metal plates 3 that are continuously connected to the inner surface of the metal coil 2. In a case where the cover 4 is attached to the outer surfaces of the metal coil 2 and the pair of metal plates 3, the cover 4 preferably has a shape corresponding to the outer surfaces of the metal coil 2 and the pair of metal plates 3 as shown in FIG. 3. In a case where the cover 4 is attached to the inner surfaces of the metal coil 2 and the pair of metal plates 3, it is preferable that the shape of the cover 4 corresponds to the inner surfaces of the metal coil 2 and the pair of metal plates 3. By forming the cover 4 in such a shape, the cooling water can be efficiently supplied. Although the material of the cover 4 is not particularly limited, the cover is preferably made of the same copper or copper alloy as the metal coil 2 and the pair of metal plates 3 from the viewpoint of construction and thermal expansion. In addition, the material of the cover 4 may be resin from the viewpoint of weight reduction.

As shown in FIG. 3, the power supply coil 1 for electric resistance welding has a side wall portion 5 interposed between the metal coil 2 and the cover 4 and between the pair of metal plates 3 and the cover 4. It is preferable that the side wall portion 5 is interposed between peripheral edges of the metal coil 2 and the pair of metal plates 3. The side wall portion 5 is brazed to the peripheral edges of the metal coil 2 and the pair of metal plates 3. Although the material of the side wall portion 5 is not particularly limited, the side wall portion is preferably made of the same copper or copper alloy as the metal coil 2 and the pair of metal plates 3 from the viewpoint of construction and thermal expansion.

A method of assembling the side wall portion 5 and the cover 4 does not need to be brazing, and may be welding, adhesion, bolt fastening, caulking, fitting, or the like. It is desirable to seal a gap generated during assembling.

Since the power supply coil 1 for electric resistance welding has the configuration as described above, a space (chamber) 10 surrounded by the metal coil 2, the pair of metal plates 3, the cover 4, and the side wall portion 5 is formed. That is, in the present example, the space 10 is formed on the outer surfaces of the metal coil 2 and the pair of metal plates 3.

As shown in FIG. 3, the power supply coil 1 for electric resistance welding has a supply pipe 6 for supplying cooling water to the space 10 and a discharge pipe 7 for discharging cooling water from the space 10 to the space 10. Since the cooling water is supplied from the supply pipe 6 to the space 10 and is discharged from the discharge pipe 7, the inner water-cooled type power supply coil 1 for electric resistance welding that does not cause water splashing is provided.

According to the present example, since the cooling water flows through the space 10 formed on the outer surfaces of the metal coil 2 and the pair of metal plates 3, the power supply coil 1 for electric resistance welding can be directly cooled and can be efficiently cooled. For this reason, it is not necessary to increase the wall thickness of the power supply coil 1 for electric resistance welding, and the weight can be reduced. Moreover, in a case where the optical camera 30 and the plasma shielding unit 32 are adopted, the inner water-cooled type power supply coil 1 for electric resistance welding is more preferable. That is, since the inner water-cooled type power supply coil 1 for electric resistance welding does not splash water, the field of view of the optical camera 30 for monitoring welding is not hindered, and the failure of the plasma shielding unit is not induced.

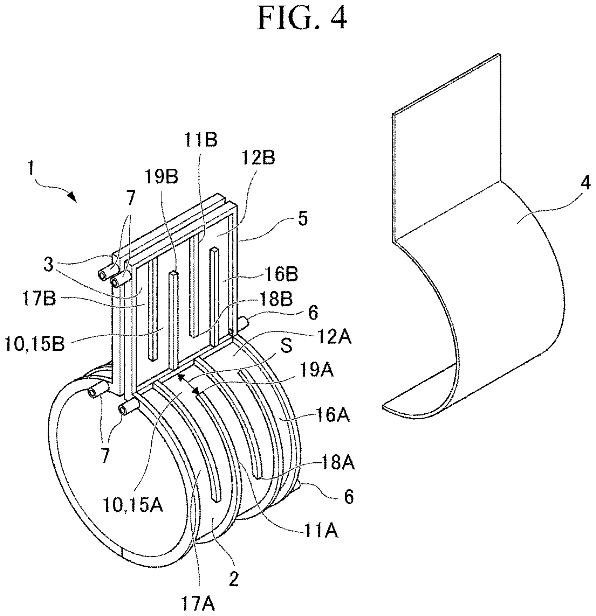

Next, a power supply coil 1 for electric resistance welding according to an embodiment of the present invention will be described with reference to FIG. 4. In the present embodiment, the same parts as those in the above-described example are designated by the same reference numerals, and the description thereof will be omitted.

FIG. 4 is a perspective view showing a state where partition members 11A and 11B are attached to the outer surfaces of the metal coil 2 and the pair of metal plates 3 in the power supply coil 1 for electric resistance welding according to the present embodiment.

First, the first space 15A surrounded by the metal coil 2, the cover 4 and the side wall portion 5 in the power supply coil 1 for electric resistance welding according to the present embodiment will be described. The power supply coil 1 for electric resistance welding according to the present embodiment has the partition member 11A that divides the first space 15A into a second space 16A that communicates with the supply pipe 6 and a third space 17A that communicates with the discharge pipe 7. The partition member 11A is disposed in the first space 15A, for example, substantially parallel or substantially perpendicularly to a central axis direction of the metal coil 2. The "substantially perpendicularly to a central axis direction of the metal coil 2" is a direction along the circumferential direction of the metal coil 2 (that is, a tangential direction of the circumference of the metal coil 2). In FIG. 4, the partition member 11A disposed in the first space 15A is disposed substantially perpendicularly to the central axis direction of the metal coil 2. Although the material of the partition member 11A is not particularly limited, it is preferable to use the same copper or copper alloy as the metal coil 2 and the pair of metal plates 3 from the viewpoint of construction and thermal expansion. In the present embodiment, the partition member 11A has a shape along the outer surface of the metal coil 2 and is brazed to the outer surface of the metal coil 2.

The partition member 11A is located at a first end 18A in a longitudinal direction of the partition member 11A and has an opening 12Athat allows the second space 16A and the third space 17A to communicate with each other. The cooling water supplied from the supply pipe 6 flows from the second space 16A through the opening 12A to the third space 17A, and is then discharged from the discharge pipe 7.

A method of assembling the partition member 11A does not need to be brazing, and may be welding, adhesion, bolt fastening, caulking, fitting, or the like.

In the present embodiment, it is preferable to have a plurality of the partition members 11A disposed substantially parallel to each other in the first space 15A. As shown in FIG. 4, the openings 12A of the plurality of partition members 11A are alternately formed at the positions of the first end 18A and the second end 19A from the supply pipe 6 toward the discharge pipe 7. The second end 19A is an end of the partition member 11A opposite to the first end 18A in the longitudinal direction. In other words, the opening 12A is formed at the position of the first end 18A of the partition member 11A, and the opening 12A of the partition member 11A, which is adjacent to and substantially parallel to the partition member 11A, is formed at the position of the second end 19A. By forming the opening 12Ain this manner, directions in which the cooling water flow are opposite to each other before and after passing through the opening 12A. In the present specification, the fact that the cooling water flows in the opposite directions before and after passing through the opening 12A in this way is expressed like "the cooling water flows in a zigzag direction". In FIG. 4, in the first space 15A, the cooling water flows in the zigzag direction in a direction substantially perpendicular to the central axis direction of the metal coil 2 (the direction along the circumferential direction of the metal coil 2).

In addition, in the present embodiment, the zigzag direction in which the cooling water in the first space 15A flows is the direction along the circumferential direction of the metal coil 2 (the tangential direction of the circumference of the metal coil 2) or the direction substantially parallel to the central axis direction of the metal coil 2. From the viewpoint of efficient cooling, for example, it is preferable to dispose the partition member 11A along the circumferential direction of the metal coil 2 in the first space 15A. The disposition pattern of the partition member 11A will be described below along with the examples.

The first space 15A surrounded by the metal coil 2, the cover 4 and the side wall portion 5 has been described above. However, in the present embodiment, the same applies to a fourth space 15B surrounded by the pair of metal plates 3, the cover 4, and the side wall portion 5. Specifically, the power supply coil 1 for electric resistance welding according to the present embodiment has the partitioning member 11B that divides the fourth space 15B into a fifth space 16B communicating with the supply pipe 6 and a sixth space 17B communicating with the discharge pipe 7, in the fourth space 15B. The partition member 11B is located at a third end 18B in the longitudinal direction of the partition member 11B and has an opening 12B that allows the fifth space 16B and the sixth space 17B to communicate with each other. Additionally, a plurality of the partition member 11B disposed substantially parallel to each other in fourth space 15B are provided, and the openings 12B of the plurality of partition member 11B are alternately formed at the position of a third end 18B and the position of a fourth end 19B opposite to the third end 18B in the longitudinal direction from the supply pipe 6 toward the discharge pipe 7. In FIG. 4, the partition member 11B disposed in the fourth space 15B is disposed in a substantially perpendicular direction along the outer surfaces of the pair of metal plates 3. The substantially perpendicular direction along the outer surfaces of the pair of metal plates 3 is a direction in which the outer surfaces of the pair of metal plates 3 face the central axis of the metal coil 2 (up-down direction on the paper plane of FIG. 4). By disposing the partition member 11B in this manner, the cooling water flows in the zigzag direction in the substantially perpendicular direction of the pair of metal plates 3 in the fourth space 15B.

As described above, since the power supply coil 1 for electric resistance welding has the partition members 11A and 11B, the power supply coil 1 for electric resistance welding can be more efficiently cooled.

In a case where the first space 15A and the fourth space 15B are not in communication with each other, the supply pipe 6 and the discharge pipe 7 are disposed in the first space 15A and the fourth space 15B, respectively. Additionally, in a case where the first space 15A and the fourth space 15B are in communication with each other, the supply pipe 6 and the discharge pipe 7 are disposed in the space 10.

It is preferable that the area of the opening 12A becomes smaller or the same from the supply pipe 6 toward the discharge pipe 7. In other words, the area of the opening 12A formed on the discharge pipe 7 side is preferably equal to or smaller than the area of the opening 12A formed on the supply pipe 6 side. For example, in the first space 15A, in a case where an opening formed on the supply pipe 6 side is a first opening and an opening formed on the discharge pipe 7 side is a second opening, the area of the second opening is preferably 100% or less, more preferably 95% or less than the area of the first opening. The area (mm²) of the opening 12A can be calculated, for example, by a distance S (mm) between the production the thickness (mm) of the end of the partition 11A where the opening 12A is located and the side wall portion 5 or the partition member 11A facing the end (refer to FIG. 4). The thickness (mm) of the end of the partition member 11A is the length (mm) in an outward direction from the central axis of the metal coil 2 at the end of the partition member 11A. By setting the opening 12A in this manner, the power supply coil 1 for electric resistance welding can be more effectively cooled in the first space 15A. This is because, in a case where the area of the opening 12A is set to be larger from the supply pipe 6 toward the discharge pipe 7, stagnation of the cooling water may occur in the first space 15A and cooling may become insufficient, and the metal coil 2, the pair of metal plates 3, the cover 4 and the like may be melted and lost.

The area of the opening 12B formed in the fourth space 15B is similar to that of the opening 12A. That is, it is preferable that the area of the opening 12B becomes smaller or the same from the supply pipe 6 toward the discharge pipe 7.

The space 10 may be formed on the inner surface or may be formed on both the outer surface and the inner surface in addition to being formed on the outer surfaces of the metal coil 2 and the pair of metal plates 3 as shown in FIG. 4. However, from the viewpoint of the heating capability of the power supply coil 1 for electric resistance welding and the ease of constructing the space 10, it is preferable to form only the space 10 on the outer surfaces of the metal coil 2 and the pair of metal plates 3.

In a connection portion between a cooling water source pipe and the supply pipe 6, it is preferable that the pipe diameter of the supply pipe 6 is equal to or smaller than the pipe diameter of the cooling water source pipe connected to the supply pipe 6. By setting the pipe diameter of the supply pipe 6 in this manner, it is possible to more effectively cool the power supply coil 1 for electric resistance welding in the space 10. In a case where the pipe diameter of the supply pipe 6 is set to be larger than the pipe diameter of the cooling water source pipe connected to the supply pipe 6, stagnation of the cooling water may occur at the corners of the connection portion and cooling may become insufficient, and the metal coil 2, the pair of metal plates 3, the cover 4, and the like may be melted and lost.

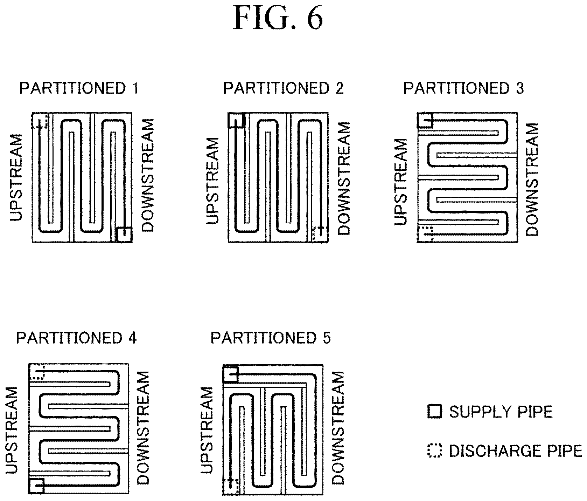

Since the power supply coil 1 for electric resistance welding is exposed to the plasma shielding unit 32 on a pipe manufacturing downstream side and the heat of the electric resistance welding, it is preferable to cool the power supply coil 1 for electric resistance welding from the pipe manufacturing downstream side. That is, it is preferable to adopt a structure in which the pipe manufacturing downstream side of the steel pipe is cooled more preferentially than a pipe manufacturing upstream side. The "the pipe manufacturing downstream side is more preferentially than the pipe manufacturing upstream side" means, for example, cooling 50% or more of the volume of the space 10 of the metal coil 2 from the pipe manufacturing downstream side. More preferably, 33% or more of the volume of the space 10 of the metal coil 2 is cooled from the pipe manufacturing downstream side. For this reason, it is preferable to dispose the supply pipe 6 on the pipe manufacturing downstream side and the discharge pipe 7 on the pipe manufacturing upstream side. However, in the actual facilities, the squeeze roll 31 is disposed on the downstream side of the power supply coil 1 for electric resistance welding. Therefore, the disposition for water supply to the electric resistance welding power supply coil 1 may be performed from the pipe manufacturing upstream side. In a case where the supply pipe 6 is disposed on the pipe manufacturing upstream side, it is preferable to have, for example, a structure capable of preferentially performing cooling from the pipe manufacturing downstream side after the cooling water supplied from the supply pipe 6 disposed on the pipe manufacturing upstream side once flows to the pipe manufacturing downstream side, as in an example of "Partitioned 5" in FIG. 6. By adopting a configuration in which the power supply coil 1 for electric resistance welding is cooled from the pipe manufacturing downstream side, the power supply coil 1 for electric resistance welding can be more efficiently cooled.

According to the present embodiment, the power supply coil 1 for electric resistance welding can be directly cooled. For this reason, it is not necessary to increase the wall thickness of the power supply coil 1 for electric resistance welding, and the weight can be reduced. Moreover, no water splashing will occur. Since the power supply coil 1 for electric resistance welding has the partition members 11A and 11B and the power supply coil 1 for electric resistance welding is configured to be cooled from the pipe manufacturing downstream side, the power supply coil 1 for electric resistance welding can be more efficiently cooled.

Pipe manufacturing equipment according to another embodiment will be described below. As shown in FIG. 2, the pipe manufacturing equipment according to the present embodiment has the power supply coil 1 for electric resistance welding having the above configuration and the squeeze roll 31 disposed on the pipe manufacturing downstream side of the power supply coil 1 for electric resistance welding for pipe forming, and cools the power supply coil 1 for electric resistance welding from the pipe manufacturing downstream side.

The pipe manufacturing equipment according to the present embodiment includes both or either of the plasma shielding unit 32 for plasma-shielding the electric-resistance welded portion of the steel pipe between the power supply coil 1 for electric resistance welding and the squeeze roll 31 and the optical camera 30 that monitors the state of the electric-resistance welded portion. The plasma shielding unit 32 performs electric resistance welding while irradiating the welded portion of the electric resistance welding steel pipe with plasma. The plasma shielding unit 32 is, for example, a plasma torch. The optical camera 30 is disposed above the welded portion of the electric resistance welding steel pipe and monitors the state of the welded portion.

According to the present embodiment, the power supply coil 1 for electric resistance welding can be efficiently cooled by cooling the power supply coil 1 for electric resistance welding from the pipe manufacturing downstream side. In a case where the optical camera 30 and the plasma shielding unit 32 are adopted, the inner water-cooled type power supply coil 1 for electric resistance welding is more preferable. That is, since the inner water-cooled type power supply coil 1 for electric resistance welding does not splash water, the field of view of the optical camera 30 for monitoring welding is not hindered, and the failure of the plasma shielding unit is not induced. Moreover, according to the present embodiment, a large-diameter electric resistance welding steel pipe can be manufactured without any trouble.

Examples will be shown below.

### [Examples]

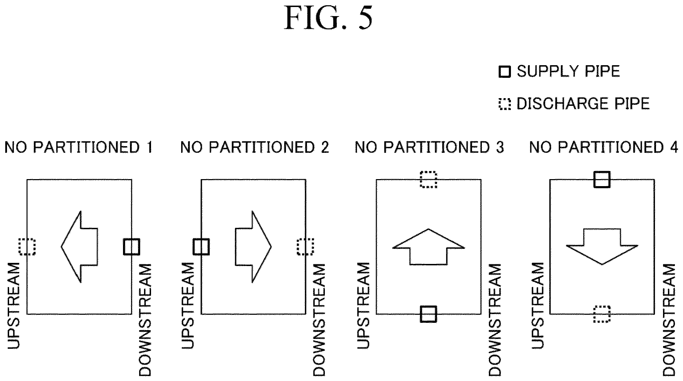

The power supply coil 1 for electric resistance welding for steel pipes having an outer diameter of 11-3/4 inch was used to form the spaces 10 having various patterns. The metal coil 2 and the pair of metal plates 3 were copper plates having a thickness of 3 mm, the side wall portion 5 having a thickness of 6 mm were brazed to the peripheral edges of the outer surfaces of the metal coil 2 and the pair of metal plates 3, and the cover 4 made of a copper plate having a thickness of 1.5 mm was superimposed thereon, and the end of the cover 4 and the side wall portion 5 were brazed and closed. FIG. 5 is a view showing a flow of the cooling water in the first space 15A in a case where the partition member 11A is not provided, which is created in this way, and is a development view in the side surface portion of the metal coil 2 as viewed from the direction perpendicular to the metal plate 3.

FIG. 6 is a view showing the flow of the cooling water in the first space 15A in a case where the partition member 11A is provided, and is a development view of the side surface portion of the metal coil 2 as viewed from the direction perpendicular to the metal plate 3. The partition member 11A was a copper plate having a thickness of 6 mm, and was brazed to the outer surface of the metal coil 2.

In FIG. 5, by changing the positions of the supply pipe 6 and the discharge pipe 7, the flow direction of the cooling water is variously set as indicated by white arrows. In each development view of FIG. 5, a left side of the paper plane is the pipe manufacturing upstream side, and a right side of the paper plane is the pipe manufacturing downstream side.

In each development view of FIG. 6, similarly to FIG. 5, a left side of the paper plane is the pipe manufacturing upstream side, and a right side of the paper plane is the pipe manufacturing downstream side.

"Partitioned 1" and "Partitioned 2" in FIG. 6 are examples in which the partition member 11A is disposed substantially perpendicularly to the central axis direction of the metal coil 2 (that is, the circumferential direction of the metal coil 2). In the first space 15A of the metal coil 2, the cooling water flows in the zigzag direction along the circumferential direction of the metal coil 2.

"Partitioned 3" and "Partitioned 4" in FIG. 6 are examples in which the partition member 11A is disposed on the metal coil 2 substantially parallel to the central axis direction of the metal coil 2, and the cooling water flows in the zigzag direction substantially parallel to the central axis direction of the metal coil 2.

The optical camera 30 that monitors the state of the electric-resistance welded portion and the plasma shielding unit 32 for electric-resistance-welding the electric resistance welding steel pipe are disposed above the welded portion of the electric resistance welding steel pipe.

Using each of the above-described power supply coils 1 for electric resistance welding, in a case where the heat input was 600 kW and a case where the heat input was 1200 kW, the cooling water flow rate was changed from 30 L/min to 240 L/min, and the occurrence situation of the melting loss was tested. The results are shown in Table 1.

An example "External water-cooled" at the top of Table 1 is an external water-cooled type of the related art, and is an example in which the cooling water is directly jetted to the coil.

In examples having no partition member 11A, that is, in examples of "No partitioned 1" to "No partitioned 4", the "No partitioned 1" is an example in which the supply pipe 6 was disposed on the pipe manufacturing downstream side and cooling was preferentially cooled from the pipe manufacturing downstream side. In the examples of "No partitioned 2" to "No partitioned 4", cooling was not preferentially performed from the pipe manufacturing downstream side.

In examples having partition member 11A, that is, in examples of "Partitioned 1" to "Partitioned 5", the examples of "Partitioned 1" and "Partitioned 5" are example in which cooling was preferentially performed from the pipe manufacturing downstream side. In the examples of "Partitioned 2", "Partitioned 3", and "Partitioned 4", cooling was not preferentially performed from the pipe manufacturing downstream side. In addition, regarding the example of "Partitioned 5", as shown in FIG. 6, the supply pipe 6 was disposed on the pipe manufacturing upstream side, but cooling was preferentially performed from the pipe manufacturing downstream side after the cooling water supplied from the supply pipe 6 once flowed to the pipe manufacturing downstream side.

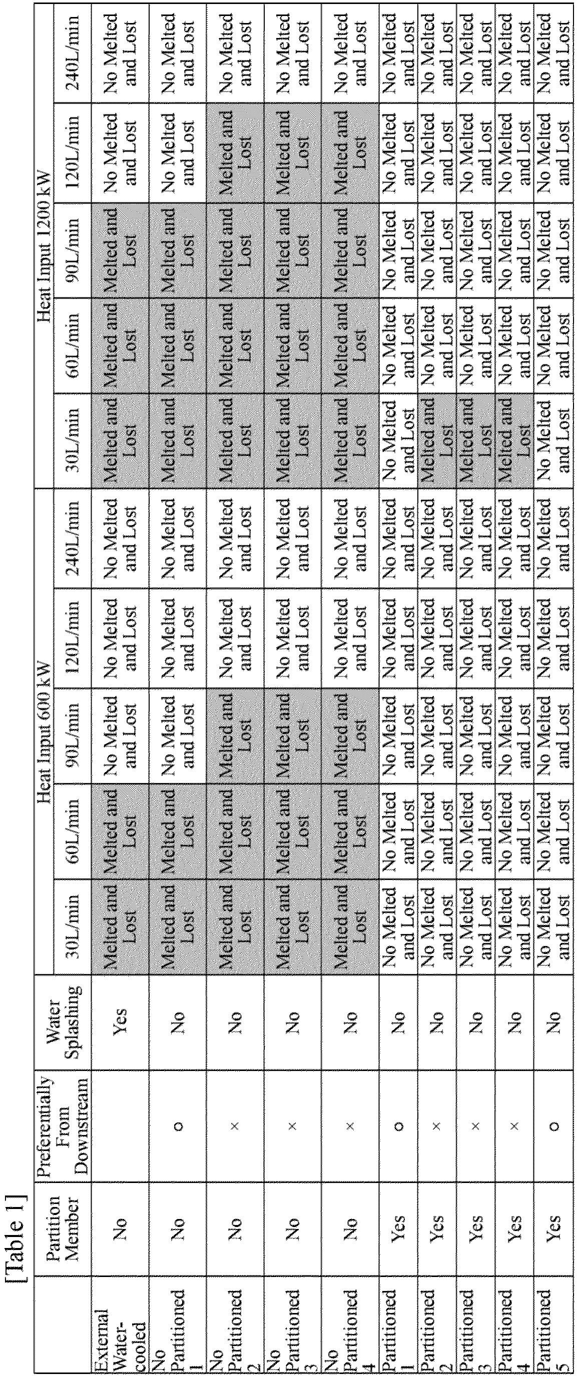

In a case where no partition member 11A is provided, as shown in Table 1, in the example of "External water-cooled", the cooling water was directly jetted to the metal coil 2. Thus, water splashing occurred. In the examples of "No partitioned 2" to "No partitioned 4", in a case where the heat input was 600 kW, the melting loss occurred at a cooling water flow rate of 90 L/min or less, and in a case where the heat input was 1200 kW, the melting loss occurred at a cooling water flow rate of 120 L/min or less. On the other hand, in the case of "No partitioned 1", in a case were the heat input was 600 kW, the melting loss did not occur at a cooling water flow rate of 90 L/min or more, and in a case where the heat input was 1200 kW, the melting loss did not occur at a cooling water flow rate of 120 L/min or more. Accordingly, efficient cooling is possible by preferentially cooling the power supply coil 1 for electric resistance welding is preferentially cooled from the pipe manufacturing downstream side.

In the examples of "Partitioned 1" to "Partitioned 5" having the partition member 11A, in a case where the cooling water flow rate was 30 L/min, the melting loss occurred in the examples of "Partitioned 2", "Partitioned 3" and "Partitioned 4" in which cooling was not preferentially performed from the pipe manufacturing downstream side. On the other hand, in the examples of "Partitioned 1" and "Partitioned 5" in which cooling was preferentially performed from the pipe manufacturing downstream side, the melting loss did not occur. Accordingly, it has been found that the power supply coil 1 for welding electric resistance welding has the partition member 11A, and preferentially cooling the power supply coil 1 for electric resistance welding from the pipe manufacturing downstream side, whereby more efficient cooling is possible.

The conditions under which pipes were manufactured using the power supply coil 1 for electric resistance welding with "Partitioned 1" and the results of occurrence of the melting loss are shown in Table 2. The inner diameter of the metal coil 2 is 353 mm in diameter, and the size of the outer diameter of the electric resistance welding steel pipe that can manufacture pipes is 244 to 333 mm. As shown in Table 2, large-diameter electric resistance welding steel pipes could be manufactured without any trouble. The water splashing situations of the electric-resistance welded portion during pipe manufacturing, which is imaged by the optical camera 30, are shown in (a) of FIG. 7 and (b) of FIG. 7. (a) of FIG. 7 is an optical camera image in a case where the related-art external water-cooled type coil that directly jets the cooling water to the coil is used, and (b) of FIG. 7 is an optical camera image in a case where the power supply coil 1 for electric resistance welding of the present invention is used. As shown in (a) of FIG. 7, in the case of the related-art external water-cooled type coil, water-splashed water droplets of the cooling water are reflected in the optical camera image. On the other hand, as shown in (b) of FIG. 7, in a case the power supply coil 1 for electric resistance welding of the present invention is used, water droplets caused by the water splashing of the cooling water were not reflected in the optical camera image, and pipe manufacturing could not be realize in a situation where there were no water droplets or steam.

**[Table 2]**

| | Outer Diameter [mm] | Plate Thickness [mm] | Pipe Manufacturing Speed [m/min] | Heat Input [kW] | Occurrence of Melting Loss |
|---|---|---|---|---|---|
| Copper Pipe A | 244 | 10.0 | 37 | 1370 | No |
| Copper Pipe B | 298 | 15.7 | 12 | 1260 | No |
| Copper Pipe C | 298 | 15.7 | 12.5 | 1220 | No |
| Copper Pipe D | 298 | 15.7 | 16.6 | 1330 | No |
| Copper Pipe E | 298 | 12.7 | 25 | 1300 | No |

Additionally, by making the power supply coil 1 for electric resistance welding an internal water-cooled type, as shown in Table 3, it could be confirmed that reflection of water droplets and steam of the optical camera 30 could be suppressed, and damage to the plasma shielding unit 32 could also be suppressed.

**[Table 3]**

| | Optical Camera | Plasma Shielding Unit |
|---|---|---|
| External Water-cooled | With Deflection of Water Droplets and Steam | Melted and Lost |
| Internal Water-cooled | No Deflection of Water Droplets and Steam | No Melted and Lost |

Although the preferred embodiments and examples of the present invention have been described above in detail, the present invention is not limited to these embodiments and examples, and modifications and the like are possible within the scope falling under the appended claims.

### [Industrial Applicability]

According to the present invention, it is possible to provide the power supply coil for electric resistance welding for heating a steel pipe to be welded by electric resistance, in which the thickness of the power supply coil for electric resistance welding can be reduced to reduce the weight, water droplets are not splashed, and efficient cooling is possible, and the pipe manufacturing equipment using the same. Moreover it is possible to provide the pipe manufacturing equipment capable of manufacturing a large-diameter electric resistance welding steel pipe without any trouble. For that reason, the present invention has extremely great industrial applicability.

### [Brief Description of the Reference Symbols]

1: power supply coil for electric resistance welding
2: metal coil
3: pair of metal plates
4: cover
5: side wall portion
6: supply pipe
7: discharge pipe
10: space
11A: first space partition member
11B: fourth space partition member
12A: first space opening
12B: fourth space opening
15A: first space
15B: fourth space
16A: second space
16B: fifth space
17A: third space
17B: sixth space
18A: first end of partition member 11A
18B: third end of partition member 11B
19A: second end of partition member 11A
19B: fourth end of partition member 11B
30: optical camera
31: squeeze roll
32: plasma shielding unit
33: high-frequency power source
25: steel sheet coil
50: forming zone
51: welding zone
52: heat treatment zone
53: sizing zone
101: power supply coil
102: water-cooling pipe
103: cooling water channel

## Claims

1. A power supply coil for electric resistance welding (1) for heating a steel pipe to be welded by electric resistance comprising:
a metal coil (2) that has a single-turn tubular shape and has a pair of end surfaces facing each other in a circumferential direction;
a pair of metal plates (3) that is connected to the pair of end surfaces of the metal coil (2);
a cover (4) that is attached to at least one of outer surfaces and inner surfaces of the metal coil (2) and the pair of metal plates (3);
a side wall portion (5) that is interposed between the metal coil (2) and the cover (4) and between the pair of metal plates (3) and the cover (4);
a supply pipe (6) that supplies cooling water to a space (10) surrounded by the metal coil (2), the pair of metal plates (3), the cover (4), and the side wall portion (5);
a discharge pipe (7) that discharges the cooling water from the space (10); **characterised by**
a first partition member (11A) that divides a first space (15A) surrounded by the metal coil (2), the cover (4), and the side wall portion (5) into a second space (16A) that communicates with the supply pipe (6) and a third space (17A) that communicates with the discharge pipe (7),
wherein the first partition member (11A) has an opening (12A) that is located at a first end (18A) of the first partition member (11A) in a longitudinal direction of the first partition member (11A) and that allows the second space (16A) and the third space (17A) to communicate with each other,
wherein a plurality of the first partition members (11A) are disposed substantially parallel to each other in the first space (15A), and
wherein the openings (12A) of the plurality of the first partition members (11A) are alternately formed at the first end (18A) and a second end (19A) opposite to the first end (18A) in the longitudinal direction of the first partition members (11A) from the supply pipe (6) toward the discharge pipe (7).

2. The power supply coil for electric resistance welding (1) according to claim 1, further comprising:
a second partition member (11B) that divides a fourth space (15B) surrounded by the pair of metal plates (3), the cover (4), and the side wall portion (5) into a fifth space (16B) that communicates with the supply pipe (6) and a sixth space (17B) that communicates with the discharge pipe (7),
wherein the second partition member (11B) has an opening (12B) that is located at a third end (18B) of the sesond partition member (11B) in the longitudinal direction of the second partition member (11B) and that allows the fifth space (16B) and the sixth space (17B) to communicate with each other.

3. The power supply coil for electric resistance welding (1) according to claim 2,
wherein a plurality of the second partition members (11B) are disposed substantially parallel to each other in the fourth space (15B), and
wherein the openings (12B) of the plurality of the second partition members (11B) are alternately formed at the third end (18B) and a fourth end (19B) opposite to the third end (18B) in the longitudinal direction of the second partition members (11B) from the supply pipe (6) toward the discharge pipe (7).

4. The power supply coil for electric resistance welding (1) according to any one of claims 1 to 3,
wherein an area of the opening (12A, 12B) becomes smaller or the same from the supply pipe (6) toward the discharge pipe (7).

5. The power supply coil for electric resistance welding (1) according to any one of claims 1 to 4,
wherein the cover (4) is attached only to the outer surfaces of the metal coil (2) and the pair of metal plates (3).

6. The power supply coil for electric resistance welding (1) according to any one of claims 1 to 5,
wherein a diameter of the supply pipe (6) is set to be equal to or smaller than a diameter of a cooling water source pipe connected to the supply pipe (6).

7. The power supply coil for electric resistance welding (1) according to any one of claims 1 to 6,
wherein the metal coil (2) and the pair of metal plates (3) are made of copper or a copper alloy.

8. A pipe manufacturing equipment comprising:
the power supply coil for electric resistance welding (1) according to any one of claims 1 to 7; and
a squeeze roll (31) that is disposed on a pipe manufacturing downstream side of the power supply coil for electric resistance welding (1),
wherein the power supply coil for electric resistance welding (1) is cooled from the pipe manufacturing downstream side.

9. The pipe manufacturing equipment according to claim 8, further comprising both or either of:
a plasma shielding unit (32) for plasma-shielding an electric-resistance welded portion of the steel pipe between the power supply coil for electric resistance welding (1) and the squeeze roll, and
an optical camera (30) that monitors a state of the electric-resistance welded portion.

## Patentansprüche

1. Stromversorgungsspule zum elektrischen Widerstandsschweißen (1) zur Erwärmung eines durch elektrischen Widerstand zu schweißenden Stahlrohrs, die aufweist:
eine Metallspule (2), die eine eingängige Röhrenform hat und ein Paar Endflächen hat, die in einer Umfangsrichtung zueinander weisen;
ein Paar Metallplatten (3), das mit dem Paar Endflächen der Metallspule (2) verbunden ist;
eine Abdeckung (4), die an Außenflächen und/oder Innenflächen der Metallspule (2) und des Paars Metallplatten (3) angebracht ist;
einen Seitenwandabschnitt (5), der zwischen der Metallspule (2) und der Abdeckung (4) sowie zwischen dem Paar Metallplatten (3) und der Abdeckung (4) eingefügt ist;
ein Zufuhrrohr (6), das Kühlwasser einem Raum (10) zuführt, der von der Metallspule (2), dem Paar Metallplatten (3), der Abdeckung (4) und dem Seitenwandabschnitt (5) umgeben ist;
ein Abgaberohr (7), das das Kühlwasser aus dem Raum (10) abgibt;
**gekennzeichnet durch**
ein erstes Trennelement (11A), das einen von der Metallspule (2), der Abdeckung (4) und dem Seitenwandabschnitt (5) umgebenen ersten Raum (15A) in einen zweiten Raum (16A), der mit dem Zufuhrrohr (6) kommuniziert, und einen dritten Raum (17A) trennt, der mit dem Abgaberohr (7) kommuniziert,
wobei das erste Trennelement (11A) eine Öffnung (12A) hat, die an einem ersten Ende (18A) des ersten Trennelements (11A) in einer Längsrichtung des ersten Trennelements (11A) liegt und die ermöglicht, dass der zweite Raum (16A) und der dritte Raum (17A) miteinander kommunizieren;
wobei mehrere der ersten Trennelemente (11A) im ersten Raum (15A) im Wesentlichen parallel zueinander angeordnet sind und
wobei die Öffnungen (12A) der mehreren der ersten Trennelemente (11A) am ersten Ende (18A) und an einem zweiten Ende (19A) entgegengesetzt zum ersten Ende (18A) in der Längsrichtung der ersten Trennelemente (11A) vom Zufuhrrohr (6) hin zum Abgaberohr (7) abwechselnd gebildet sind.

2. Stromversorgungsspule zum elektrischen Widerstandsschweißen (1) nach Anspruch 1, die ferner aufweist:
ein zweites Trennelement (11B), das einen von dem Paar Metallplatten (3), der Abdeckung (4) und dem Seitenwandabschnitt (5) umgebenen vierten Raum (15B) in einen fünften Raum (16B), der mit dem Zufuhrrohr (6) kommuniziert, und einen sechsten Raum (17B) trennt, der mit dem Abgaberohr (7) kommuniziert,
wobei das zweite Trennelement (11B) eine Öffnung (12B) hat, die an einem dritten Ende (18B) des zweiten Trennelements (11B) in der Längsrichtung des zweiten Trennelements (11B) liegt und die ermöglicht, dass der fünfte Raum (16B) und der sechste Raum (17B) miteinander kommunizieren.

3. Stromversorgungsspule zum elektrischen Widerstandsschweißen (1) nach Anspruch 2,
wobei mehrere der zweiten Trennelemente (11B) im vierten Raum (15B) im Wesentlichen parallel zueinander angeordnet sind und
wobei die Öffnungen (12B) der mehreren der zweiten Trennelemente (11B) am dritten Ende (18B) und an einem vierten Ende (19B) entgegengesetzt zum dritten Ende (18B) in der Längsrichtung der zweiten Trennelemente (11B) vom Zufuhrrohr (6) hin zum Abgaberohr (7) abwechselnd gebildet sind.

4. Stromversorgungsspule zum elektrischen Widerstandsschweißen (1) nach einem der Ansprüche 1 bis 3,
wobei eine Fläche der Öffnung (12A, 12B) vom Zufuhrrohr (6) hin zum Abgaberohr (7) kleiner wird oder gleich bleibt.

5. Stromversorgungsspule zum elektrischen Widerstandsschweißen (1) nach einem der Ansprüche 1 bis 4,
wobei die Abdeckung (4) nur an den Außenflächen der Metallspule (2) und des Paars Metallplatten (3) angebracht ist.

6. Stromversorgungsspule zum elektrischen Widerstandsschweißen (1) nach einem der Ansprüche 1 bis 5,
wobei ein Durchmesser des Zufuhrrohrs (6) so eingestellt ist, dass er gleich oder kleiner als ein Durchmesser eines Rohrs einer Kühlwasserquelle ist, das mit dem Zufuhrrohr (6) verbunden ist.

7. Stromversorgungsspule zum elektrischen Widerstandsschweißen (1) nach einem der Ansprüche 1 bis 6,
wobei die Metallspule (2) und das Paar Metallplatten (3) aus Kupfer oder einer Kupferlegierung hergestellt sind.

8. Ausrüstung zur Rohrherstellung, die aufweist:
die Stromversorgungsspule zum elektrischen Widerstandsschweißen (1) nach einem der Ansprüche 1 bis 7; und
eine Druckrolle (31), die auf einer nachgelagerten Rohrherstellungsseite der Stromversorgungsspule zum elektrischen Widerstandsschweißen (1) angeordnet ist,
wobei die Stromversorgungsspule zum elektrischen Widerstandsschweißen (1) von der nachgelagerten Rohrherstellungsseite gekühlt wird.

9. Ausrüstung zur Rohrherstellung nach Anspruch 8, die ferner aufweist:
eine Plasmaabschirmeinheit (32) zur Plasmaabschirmung eines durch elektrischen Widerstand geschweißten Abschnitts des Stahlrohrs zwischen der Stromversorgungsspule zum elektrischen Widerstandsschweißen (1) und der Druckrolle und/oder
eine optische Kamera (30), die einen Zustand des durch elektrischen Widerstand geschweißten Abschnitts überwacht.

## Revendications

1. Bobine d'alimentation en courant pour le soudage par résistance électrique (1) afin de chauffer un tuyau en acier à souder par résistance électrique comprenant :
une bobine en métal (2) qui a une forme tubulaire à un seul tour et a une paire de surfaces d'extrémité se faisant face dans une direction circonférentielle ;
une paire de plaques métalliques (3) qui est raccordée à la paire de surfaces d'extrémité de la bobine en métal (2) ;
un couvercle (4) qui est fixé à au moins l'une des surfaces externes et des surfaces internes de la bobine en métal (2) et de la paire de plaques métalliques (3) ;
une partie de paroi latérale (5) qui est intercalée entre la bobine en métal (2) et le couvercle (4) et entre la paire de plaques métalliques (3) et le couvercle (4) ;
un tuyau d'alimentation (6) qui fournit l'eau de refroidissement à un espace (10) entouré par la bobine en métal (2), la paire de plaques métalliques (3), le couvercle (4) et la partie de paroi latérale (5) ;
un tuyau de décharge (7) qui décharge l'eau de refroidissement de l'espace (10) ;
**caractérisée par** :
un premier élément de séparation (11A) qui divise un premier espace (15A) entouré par la bobine en métal (2), le couvercle (4) et la partie de paroi latérale (5) en un deuxième espace (16A) qui communique avec le tuyau d'alimentation (6) et en un troisième espace (17A) qui communique avec le tuyau de décharge (7),
dans laquelle le premier élément de séparation (11A) a une ouverture (12A) qui est située au niveau d'une première extrémité (18A) du premier élément de séparation (11A) dans une direction longitudinale du premier élément de séparation (11A) et qui permet au deuxième espace (16A) et au troisième espace (17A) de communiquer entre eux,
dans laquelle une pluralité de premiers éléments de séparation (11A) sont disposés de manière sensiblement parallèle entre eux dans le premier espace (15A), et
dans laquelle les ouvertures (12A) de la pluralité de premiers éléments de séparation (11A) sont formées, de manière alternée, au niveau de la première extrémité (18A) et d'une deuxième extrémité (19A) opposée à la première extrémité (18A) dans la direction longitudinale des premiers éléments de séparation (11A) du tuyau d'alimentation (6) vers le tuyau de décharge (7).

2. Bobine d'alimentation en courant pour le soudage par résistance électrique (1) selon la revendication 1, comprenant en outre :
un deuxième élément de séparation (11B) qui divise un quatrième espace (15B) entouré par la paire de plaques métalliques (3), le couvercle (4) et la partie de paroi latérale (5) en un cinquième espace (16B) qui communique avec le tuyau d'alimentation (6) et en un sixième espace (17B) qui communique avec le tuyau de décharge (7),
dans laquelle le deuxième élément de séparation (11B) a une ouverture (12B) qui est située au niveau d'une troisième extrémité (18B) du deuxième élément de séparation (11B) dans la direction longitudinale du deuxième élément de séparation (11B) et qui permet au cinquième espace (16B) et au sixième espace (17B) de communiquer entre eux.

3. Bobine d'alimentation en courant pour le soudage par résistance électrique (1) selon la revendication 2,
dans laquelle une pluralité de deuxièmes éléments de séparation (11B) sont disposés de manière sensiblement parallèle entre eux dans le quatrième espace (15B), et
dans laquelle les ouvertures (12B) de la pluralité de deuxièmes éléments de séparation (11B) sont formées, de manière alternée, au niveau de la troisième extrémité (18B) et d'une quatrième extrémité (19B) opposée à la troisième extrémité (18B) dans la direction longitudinale des deuxièmes éléments de séparation (11B), du tuyau d'alimentation (6) vers le tuyau de décharge (7).

4. Bobine d'alimentation en courant pour le soudage par résistance électrique (1) selon l'une quelconque des revendications 1 à 3,
dans laquelle une zone de l'ouverture (12A, 12B) devient plus petite ou identique, du tuyau d'alimentation (6) vers le tuyau de décharge (7).

5. Bobine d'alimentation en courant pour le soudage par résistance électrique (1) selon l'une quelconque des revendications 1 à 4,
dans laquelle le couvercle (4) est fixé uniquement aux surfaces externes de la bobine en métal (2) et de la paire de plaques métalliques (3).

6. Bobine d'alimentation en courant pour le soudage par résistance électrique (1) selon l'une quelconque des revendications 1 à 5,
dans laquelle un diamètre du tuyau d'alimentation (6) est déterminé comme étant égal ou inférieur à un diamètre d'un tuyau de source d'eau de refroidissement raccordé au tuyau d'alimentation (6).

7. Bobine d'alimentation en courant pour le soudage par résistance électrique (1) selon l'une quelconque des revendications 1 à 6,
dans laquelle la bobine en métal (2) et la paire de plaques métalliques (3) sont réalisées à partir de cuivre ou d'un alliage de cuivre.

8. Équipement de fabrication de tuyau comprenant :
la bobine d'alimentation en courant pour le soudage par résistance électrique (1) selon l'une quelconque des revendications 1 à 7 ; et
un rouleau de compression (31) qui est disposé sur le côté en aval de fabrication de tuyau de la bobine d'alimentation en courant pour le soudage par résistance électrique (1),
dans lequel la bobine d'alimentation en courant pour le soudage par résistance électrique (1) est refroidie à partir du côté en aval de fabrication de tuyau.

9. Équipement de fabrication de tuyau selon la revendication 8, comprenant en outre les deux ou chacune parmi :
une unité de blindage de plasma (32) pour protéger par plasma une partie soudée par résistance électrique du tuyau en acier entre la bobine d'alimentation en courant pour le soudage par résistance électrique (1) et le rouleau de compression, et
une caméra optique (30) qui surveille un état de la partie soudée par résistance électrique.
